# EUROPEAN PATENT SPECIFICATION

(11) **EP 2 907 645 B1**
(45) Date of publication and mention of the grant of the patent: **14.09.2016**
(21) Application number: 15154484.8
(22) Date of filing: 10.02.2015
(51) Int. Cl.: B29C 45/54, B29C 45/77

(54) **Injection unit**
Einspritzeinheit
Unité d'injection

(30) Priority: 17.02.2014 JP 2014027865
(43) Date of publication of application: 19.08.2015
(73) Proprietor: SUMITOMO HEAVY INDUSTRIES, LTD., Tokyo 141-6025 (JP)
(72) Inventor: Amano, Mitsuaki, Chiba-shi, Chiba 263-0001 (JP); Takeuchi, Shigeru, Chiba-shi, Chiba 263-0001 (JP); Nosaka, Hiromichi, Chiba-shi, Chiba 263-0001 (JP)
(74) Representative: Louis Pöhlau Lohrentz

(56) References cited:
- EP-A2- 0 943 412
- WO-A1-2013/159210
- US-A- 4 678 420
- US-A- 5 246 660
- US-A1- 2012 068 373

## Description

### BACKGROUND OF THE INVENTION

### Incorporation by Reference

The entire content of Japanese Patent Application No.2014-027865, filed February 17, 2014, is incorporated herein by reference.

### Field of the Invention

The present invention relates to an injection unit.

### Description of Related Art

A pre-plasticization type injection unit is provided with a first cylinder, a second cylinder to which a molding material is fed from the first cylinder, and a nozzle which injects the molding material which is fed from the second cylinder into a mold unit (refer to, for example, Japanese Unexamined Patent Application Publication No. 2008-238742). A liquid molding material filled into the mold unit is solidified, and thus a molding product is obtained.

In the related art, an operation of a first movable section whichmoves the moldingmaterial in the first cylinder is sometimes not harmonized with an operation of a second movable section which moves the molding material in the second cylinder.

United States Patent Application US 2012/068373 A1 discloses an injection unit of the above mentioned kind which is equipped with a condition sensor. In one embodiment, this sensor may be a pressure sensor for sensing the pressure in one of two second cylinders.

United States Patent Document US 4 678 420 discloses a similar injection unit in which pressure sensors are disposed in the first cylinder.

### SUMMARY OF THE INVENTION

The present invention has been made in view of the above-described problem and has a main object to provide an injection unit capable of harmonizing an operation of a first movable section with an operation of a second movable section.

In order to solve the above-described problem, according to an aspect of the present invention, there is provided an injection unit including: a first cylinder; a first movable section which moves a molding material in the first cylinder; a second cylinder to which the molding material is fed from the first cylinder; a second movable section which moves the molding material in the second cylinder; a nozzle which injects the molding material into a mold unit; a switching section which switches a flow direction of the molding material between the first cylinder, the second cylinder, and the nozzle; and a detecting unit which detects information about pressure of the molding material in the switching section.

According to the aspect of the present invention, an injection unit capable of harmonizing an operation of a first movable section with an operation of a second movable section is provided.

### BRIEF DESCRIPTION OF THE DRAWINGS

Fig. 1 is a diagram showing an injection unit according to an embodiment of the present invention and is a diagram showing a state where a switching section is open to both a screw cylinder and a plunger cylinder and the switching section is closed with respect to a nozzle.
Fig. 2 is a diagram showing the injection unit according to the embodiment of the present invention and is a diagram showing a state where the switching section is open to both the plunger cylinder and the nozzle and the switching section is closed with respect to the screw cylinder.

### DETAILED DESCRIPTION OF THE INVENTION

Hereinafter, a mode for carrying out the present invention will be described with reference to the drawings. In each of the drawings, the same or corresponding configurations are denoted by the same or corresponding reference numerals and the description thereof is omitted.

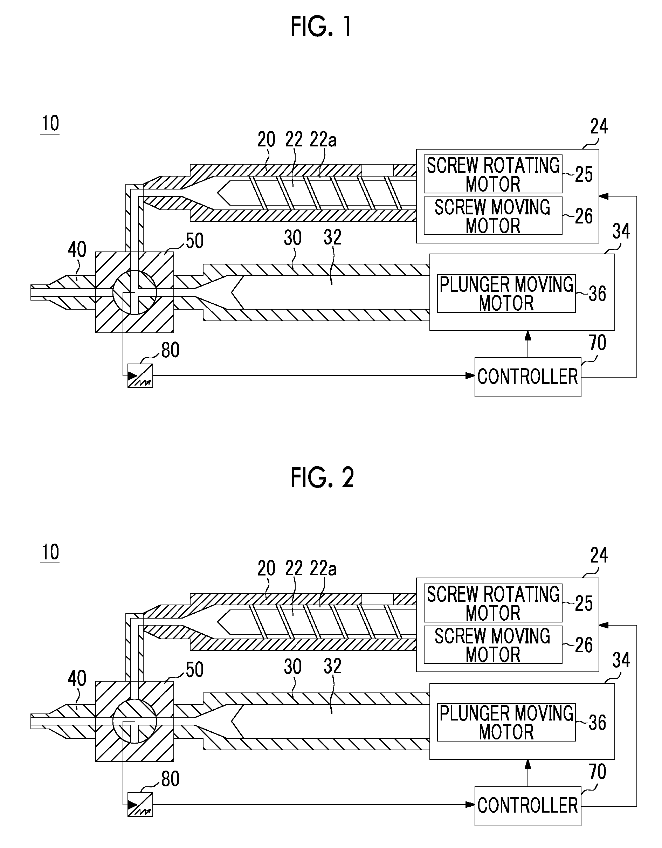

Fig. 1 is a diagram showing an injection unit according to an embodiment of the present invention and is a diagram showing a state where a switching section is open to both a screw cylinder and a plunger cylinder and the switching section is closed with respect to a nozzle. Fig. 2 is a diagram showing the injection unit according to the embodiment of the present invention and is a diagram showing a state where the switching section is open to both the plunger cylinder and the nozzle and the switching section is closed with respect to the screw cylinder.

An injection unit 10 includes a screw cylinder 20, a screw 22, a screw drive section 24, a plunger cylinder 30, a plunger 32, a plunger drive section 34, a nozzle 40, a switching section 50, a controller 70, and a pressure sensor 80.

The screw cylinder 20 is a first cylinder to which a molding material is fed from the outside. The molding material may be fed to the first cylinder in either a solid state or a liquid state. However, in this embodiment, the molding material is fed to the first cylinder in a solid state. The screw cylinder 20 heats and melts the molding material. A heat source such as a heater is provided at the outer periphery of the screw cylinder 20.

The screw 22 is a first movable section which is disposed in the screw cylinder 20 and moves the molding material in the screw cylinder 20. The screw 22 may be disposed in the screw cylinder 20 so as to be able to advance and retreat and be able to rotate. In addition, the screw 22 may also be disposed in the screw cylinder 20 so as to be unable to advance and retreat and be able to rotate.

The screw drive section 24 is a first drive section which operates the screw 22. The screw drive section 24 may have a general configuration and has, for example, a screw rotating motor 25 which rotates the screw 22 and a screw moving motor 26 which advances and retreats the screw 22. A motion conversion section which converts the rotational motion of the screw moving motor 26 to the linear motion of the screw 22 may be disposed between the screw moving motor 26 and the screw 22. The motion conversion section is configured with a ball screw or the like.

The plunger cylinder 30 is a second cylinder to which the molding material is fed from the screw cylinder 20. A heat source such as a heater is provided at the outer periphery of the plunger cylinder 30.

The plunger 32 is a second movable section which is disposed in the plunger cylinder 30 and moves the molding material in the plunger cylinder 30. The plunger 32 is disposed in the plunger cylinder 30 so as to be able to advance and retreat.

The plunger drive section 34 is a second drive section which operates the plunger 32. The plunger drive section 34 may have a general configuration and has, for example, a plunger moving motor 36 which advances and retreats the plunger 32. A motion conversion section which converts the rotational motion of the plunger moving motor 36 to the linear motion of the plunger 32 may be disposed between the plunger moving motor 36 and the plunger 32. The motion conversion section is configured with a ball screw or the like.

The nozzle 40 injects the molding material which is fed from the switching section 50 into a mold unit. A liquid molding material filled into the mold unit is solidified, and thus a molding product is obtained.

The switching section 50 switches a flow direction of the molding material between the screw cylinder 20, the plunger cylinder 30, and the nozzle 40. The switching section 50 is configured with, for example, a rotary valve. In addition, the switching section 50 may be configured with a spool valve, and the configuration of the switching section 50 is not particularly limited.

The switching section 50 is switched to a state of being open to both the screw cylinder 20 and the plunger cylinder 30 and closed with respect to the nozzle 40 (refer to Fig. 1) and a state of being open to both the plunger cylinder 30 and the nozzle 40 and closed with respect to the screw cylinder 20 (refer to Fig. 2).

In addition, the states of the switching section 50 are not limited to the state shown in Fig. 1 and the state shown in Fig. 2. For example, the switching section 50 can take a state of being open to all of the screw cylinder 20, the plunger cylinder 30, and the nozzle 40. Further, the switching section 50 can take a state of being open to both the screw cylinder 20 and the nozzle 40 and closed with respect to the plunger cylinder 30.

The controller 70 controls the screw drive section 24, the plunger drive section 34, and the switching section 50. The controller 70 has, for example, a storage section such as a memory, and a CPU, and executes a control program stored in the storage section in the CPU, thereby performing various controls.

For example, the controller 70 opens the switching section 50 to both the screw cylinder 20 and the plunger cylinder 30, as shown in Fig. 1, and drives the screw rotating motor 25, thereby rotating the screw 22 in a predetermined direction. The molding material is gradually melted while being fed forward along a spiral groove 22a of the screw 22. A liquid molding material is accumulated in front of the screw 22, and thus the screw 22 retreats. If the screw 22 retreats to a predetermined position and a predetermined amount of molding material is accumulated in front of the screw 22, the controller 70 stops the screw rotating motor 25.

The controller 70 may apply pressure to the screw 22 by driving the screw moving motor 26 in order to suppress rapid retreat of the screw 22. The controller 70 drives the screwmoving motor 26 such that the pressure of the screw reaches a setting value.

The controller 70 advances the screw 22 by driving the screw moving motor 26 after a predetermined amount of molding material is accumulated in front of the screw 22. In this way, the molding material flows from the screw cylinder 20 into the plunger cylinder 30 through the switching section 50. As a result, the molding material is accumulated in front of the plunger 32, and thus the plunger 32 retreats.

The controller 70 may apply pressure to the plunger 32 by driving the plunger moving motor 36 in order to suppress rapid retreat of the plunger 32. The controller 70 drives the plunger moving motor 36 such that the pressure of the plunger 32 reaches a setting value.

If the plunger 32 retreats to a predetermined position and a predetermined amount of molding material is accumulated in front of the plunger 32, the controller 70 rotates the screw 22 in a predetermined direction by driving the screw rotating motor 25 in order to accumulate the molding material in front of the screw 22 again. The molding material is accumulated in front of the screw 22, and thus the screw 22 retreats.

A predetermined amount of molding material is accumulated in front of each of the screw 22 and the plunger 32. In addition, a process of accumulating the molding material is not limited to the above-described process. For example, the controller 70 may cause the molding material to flow from the screw cylinder 20 into the plunger cylinder 30 through the switching section 50 by feeding forward the molding material along the spiral groove 22a of the screw 22 by rotating the screw 22 with the position of the screw 22 fixed.

After the accumulation of the molding material, a filling process of filling the mold unit with the accumulated molding material is performed. The molding material filled into the mold unit is solidified. A hold pressure process of applying pressure to the molding material in the mold unit in order to prevent insufficient filling such as a sink mark or short-shot due to the solidification of the molding material is performed. Further, a pressure reduction process of reducing pressure on the molding material in the mold unit is sometimes performed.

The controller 70 may open the switching section 50 to both the plunger cylinder 30 and the nozzle 40, as shown in Fig. 2, and drive the plunger moving motor 36, in the filling process. The plunger 32 is advanced, and thus the molding material flows from the plunger cylinder 30 into the nozzle 40 through the switching section 50. Then, the mold material is filled from the nozzle 40 into the mold unit.

Further, the controller 70 may open the switching section 50 to both the plunger cylinder 30 and the nozzle 40, as shown in Fig. 2, and drive the plunger moving motor 36, in the hold pressure process. Pressure can be applied to the molding material in the mold unit by the pressure of the plunger 32. The molding material in an amount corresponding to a shortage due to a sink mark, short-shot, or the like flows from the plunger cylinder 30 into the nozzle 40 through the switching section 50. Insufficient filling such as a sink mark or short-shot can be solved.

Further, the controller 70 may open the switching section 50 to both the plunger cylinder 30 and the nozzle 40, as shown in Fig. 2, and drive the plunger moving motor 36, in the pressure reduction process. The plunger 32 retreats, and thus the molding material flows from the nozzle 40 into the plunger cylinder 30 through the switching section 50. The pressure reduction can be performed on the molding material in the mold unit.

Incidentally, there is a case where the controller 70 controls the screw moving motor 26 such that the pressure of the screw 22 reaches a setting value. As such a case, a case of limiting the rapid retreat of the screw 22 and a case of discharging the molding material from the screw cylinder 20 can be given as an example. Pressure according to the pressure of the screw 22 is applied to the molding material in front of the screw 22 and then applied to the molding material in the switching section 50.

Further, there is a case where the controller 70 controls the plunger moving motor 36 such that the pressure of the plunger 32 reaches a setting value. As such a case, a case of limiting the rapid retreat of the plunger 32, a case of discharging the molding material from the plunger cylinder 30, a case of preventing the insufficient filling such as a sink mark or short-shot, and a case of reducing pressure on the molding material in the mold unit can be given as an example. Pressure according to the pressure of the plunger 32 is applied to the molding material in front of the plunger 32 and then applied to the molding material in the switching section 50.

The pressure sensor 80 detects the pressure of the molding material in the switching section 50. Accordingly, the pressure of the screw 22 and the pressure of the plunger 32 can be detected by the same pressure sensor 80. The operation of the screw 22 and the operation of the plunger 32 can be harmonized with each other more than a case where the pressure of the screw 22 and the pressure of the plunger 32 are detected by separate pressure sensors, as in the related art. Further, as compared to a case where a pressure sensor is disposed behind each of the screw 22 and the plunger 32, as in the related art, pressure can be detected at a position close to the mold unit, and therefore, it is easy to control the state of the molding material in the mold unit.

The pressure sensor 80 outputs a signal indicating the detected pressure to the controller 70. The controller 70 may control the screw moving motor 26 based on the detection value of the pressure sensor 80. Further, the controller 70 may control the plunger moving motor 36 based on the detection value of the pressure sensor 80. The detection value of the pressure sensor 80 may be used in the control of any process of the process of accumulating the molding material in front of the screw 22, the process of accumulating the molding material in front of the plunger 32, the filling process, the hold pressure process, and the pressure reduction process.

In addition, in this embodiment, the pressure sensor 80 is equivalent to a detecting unit stated in the appended claims. However, the detecting unit is not limited to the pressure sensor 80. It is favorable if the detecting unit is a detecting unit capable of obtaining information about the pressure in the switching section 50.

The embodiment of the injection unit has been described above. However, the present invention is not limited to the embodiment described above, and various modifications and improvements can be made within the scope of the concept of the present invention stated in the appended claims.

For example, the injection unit 10 according to the above-described embodiment is provided in a horizontal injection molding machine in which a mold opening and closing direction is horizontal. However, the injection unit 10 may be provided in a vertical injection molding machine in which a mold opening and closing direction is vertical.

Further, the screw cylinder 20 in the above-described embodiment is parallel to the plunger cylinder 30. However, the screw cylinder 20 may be perpendicular to the plunger cylinder 30 or may also be inclined with respect to the plunger cylinder 30.

Further, in the above-described embodiment, the screw 22 is used as the first movable section. However, a plunger may be used as the first movable section. The plunger as the first movable section may be disposed in the first cylinder so as to be able to advance and retreat.

## Claims

1. An injection unit comprising:
a first cylinder (20);
a first movable section (22) which moves a molding material in the first cylinder (20);
a second cylinder (30) to which the molding material is fed from the first cylinder (20) ;
a second movable section (32) which moves the molding material in the second cylinder (30);
a nozzle (40) which injects the molding material into a mold unit;
a switching section (50) which switches a flow direction of the molding material between the first cylinder (20), the second cylinder (30), and the nozzle (40);
**characterized by**
a detecting unit (80) which detects information about pressure of the molding material in the switching section (50).

2. The injection unit according to Claim 1, further comprising:
a first drive section (24) which operates the first movable section (22); and
a controller (70) which controls the first drive section (24),
wherein the controller (70) controls the first drive section (24) based on a detection value of the detecting unit (80).

3. The injection unit according to Claim 1 or 2, further comprising:
a second drive section (34) which operates the second movable section (32); and
a controller (70) which controls the second drive section (34),
wherein the controller (70) controls the second drive section (34) based on a detection value of the detecting unit (80).

## Patentansprüche

1. Spritzeinheit, umfassend:
einen ersten Zylinder (20),
einen ersten beweglichen Abschnitt (22), der eine Gießmasse in dem ersten Zylinder (20) bewegt,
einen zweiten Zylinder (30), dem die Gießmasse aus dem ersten Zylinder (20) zugeführt wird,
einen zweiten beweglichen Abschnitt (32), der die Gießmasse in dem zweiten Zylinder (30) bewegt,
eine Düse (40), die die Gießmasse in eine Formeinheit einspritzt,
einen Umschaltabschnitt (50), der eine Strömungsrichtung der Gießmasse zwischen dem ersten Zylinder (20), dem zweiten Zylinder (30) und der Düse (40) umschaltet,
**gekennzeichnet durch** eine Erkennungseinheit (80), die Information über den Druck der Gießmasse in dem Umschaltabschnitt (50) detektiert.

2. Die Spritzeinheit nach Anspruch 1, worin die Spritzeinheit weiter umfasst:
einen ersten Antriebsabschnitt (24), der den ersten beweglichen Abschnitt (22) betätigt, und
eine Steuerung (70), die den ersten Antriebsabschnitt (24) steuert,
worin die Steuerung (70) den ersten Antriebsabschnitt (24) abhängig von einem erkannten Wert der Erkennungseinheit (80) steuert.

3. Die Spritzeinheit nach Anspruch 1 oder 2, wobei die Spritzeinheit weiter umfasst:
einen zweiten Antriebsabschnitt (34), der den zweiten beweglichen Abschnitt (32) betätigt und
eine Steuerung (70), die den zweiten Antriebsabschnitt (34) steuert,
worin die Steuerung (70) den zweiten Antriebsabschnitt (34) abhängig von einem erkannten Wert der Erkennungseinheit (80) steuert.

## Revendications

1. Unité d'injection comprenant :
un premier cylindre (20) ;
une première section mobile (22) qui déplace un matériau de moulage dans le premier cylindre (20) ;
un second cylindre (30) auquel le matériau de moulage est amené à partir du premier cylindre (20) ;
une seconde section mobile (32) qui déplace le matériau de moulage dans le second cylindre (30) ;
une buse (40) qui injecte le matériau de moulage dans l'unité de moulage ;
une section de commutation (50) qui commute une direction d'écoulement du matériau de moulage entre le premier cylindre (20), le second cylindre (30) et la buse (40) ;
**caractérisée par** :
une unité de détection (80) qui détecte l'information concernant la pression du matériau de moulage dans la section de commutation (50).

2. Unité d'injection selon la revendication 1, comprenant en outre :
une première section d'entraînement (24) qui actionne la première section mobile (22) ; et
un organe de commande (70) qui commande la première section d'entraînement (24),
dans laquelle l'organe de commande (70) commande la première section d'entraînement (24) en fonction d'une valeur de détection de l'unité de détection (80).

3. Unité d'injection selon la revendication 1 ou 2, comprenant en outre :
une seconde section d'entraînement (34) qui actionne la seconde section mobile (32) ; et
un organe de commande (70) qui commande la seconde section d'entraînement (34),
dans laquelle l'organe de commande (70) commande la seconde section d'entraînement (34) en fonction d'une valeur de détection de l'unité de détection (80).
